# EUROPÄISCHE PATENTSCHRIFT

(11) **EP 2 172 266 B1**
(45) Veröffentlichungstag und Bekanntmachung des Hinweises auf die Patenterteilung: **15.11.2017**
(21) Anmeldenummer: 09011568.4
(22) Anmeldetag: 09.09.2009
(51) Int. Cl.: B01J 27/053, B01J 21/08, B01J 21/06, B01J 37/02, B01J 35/04, B01D 53/94, B01D 53/86, F01N 3/20, B01J 31/12

(54) **Harnstoff-Hydrolyse-Katalysator**
Urea hydrolysis catalyst
Catalyseur d'hydrolyse d'urée

(30) Priorität: 12.09.2008 DE 102008046994
(43) Veröffentlichungstag der Anmeldung: 07.04.2010
(73) Patentinhaber: Süd-Chemie IP GmbH & Co. KG, 80333 München (DE)
(72) Erfinder: Paulus, Markus, 83024 Rosenheim (DE); Spengler, Jörg, 53604 Bad Honnef (DE); Helmer, Olaf, 53721 Siegburg (DE); Berger, Silke, 81477 München (DE)
(74) Vertreter: Clariant Produkte (Deutschland) GmbH

(56) Entgegenhaltungen:
- EP-A- 0 487 886
- EP-A- 0 585 795
- EP-A- 0 615 777
- EP-A- 0 894 523
- EP-A- 1 374 978
- EP-A- 2 108 441
- EP-A1- 1 524 024
- EP-A2- 0 345 695
- WO-A-99/58230
- WO-A-2008/089956
- DE-A1- 3 438 367
- DE-A1- 4 230 056
- DE-A1-102005 055 827
- DE-C1- 19 734 627
- US-A- 5 330 953
- US-A1- 2003 103 889
- US-A1- 2008 031 793

## Beschreibung

Die vorliegende Erfindung betrifft einen Harnstoff-Hydrolyse-Katalysator umfassend eine katalytisch aktive Zusammensetzung enthaltend Titandioxid, Siliziumdioxid und eine Schwefelverbindung.

Ausserdem wird ein Abgasreinigungssystem zur Entstickung von Abgasen mobiler und stationärer Verbrennungsanlagen unter Verwendung des Harnstoff-Hydrolyse-Katalysators beschrieben

Fahrzeugkatalysatoren dienen der chemischen Umwandlung von Verbrennungsprodukten wie Kohlenwasserstoffen (HₘCₙ), Kohlenstoffmonoxid (CO) und Stickoxide (NOₓ) in KFZ Abgasen. Insbesondere Stickoxidemissionen NOₓ können lokale Reizungen der Atemwege hervorrufen oder in Kontakt mit Wasser in der Atmosphäre durch Säurebildung zu "Saurem Regen" führen. Daher ist man bestrebt, Stickoxide möglichst vollständig mittels Katalysatoren aus dem Abgasstrom zu entfernen.

Bei einem KFZ Ottomotor kann beispielsweise mit einem Drei-Wege-Katalysator die Oxidation von CO und HₘCₙ, sowie die Reduktion von NOₓ parallel stattfinden.

Bei einem Dieselmotor verhindert der Sauerstoffüberschuss im Abgas die Reduktion des NOₓ und macht spezielle Katalysatoren erforderlich. Daher kommen beim Dieselmotor sogenannte NOₓ-Speicherkatalysatoren oder SCR-Katalysatoren zum Einsatz.

Am SCR Katalysator (selective catalytic reduction) ist die Reduktion der Stickoxide selektiv. Das heißt, es werden bevorzugt die Stickoxide (NO, NO₂) reduziert, während Nebenreaktionen, wie die Oxidation von SO₂ zu SO₃, weitgehend unterdrückt werden.

Dabei werden die Stickoxide durch Reduktion mit dem Reduktionsmittel Ammoniak, das dem Abgas zugemischt wird, in Wasser (H₂O) und Stickstoff (N₂) umgewandelt.

NO + NO₂ + 2NH₃ • 2N₂ + 3H₂O

Da (gasförmiger) Ammoniak ein Sicherheitsrisiko darstellt und in Druckflaschen zu handhaben ist, wird der für die oben dargestellte benötigte Ammoniak in Form einer 32,5 %-igen, wässrigen Harnstofflösung bereitgestellt, die als AdBlue® bezeichnet wird.

Diese wird kontinuierlich, z.B. mittels einer Dosierpumpe oder einem Injektor in den Abgasstrom eingespritzt, wobei durch Hydrolyse Wasser und Ammoniak entstehen. Das entstandene NH₃ ist bei geeigneter Temperatur in der Lage, die Stickoxide im Abgas zu Stickstoff zu reduzieren. Typischerweise liegt der Verbrauch an Harnstoff-Wasser-Lösung in der Größenordnung von etwa 2 bis 8% des eingesetzten Dieselkraftstoffs.

Das SCR-System kann hierzu vier Reaktionsstufen umfassen, mit jeweils einem verschiedenen Katalysatortyp beschleunigt werden: dem V-Kat, H-Kat, SCR-Kat und dem Oxi-Kat.

In einem ersten Schritt wird mit dem sogenannten Vor-Katalysator (V-Kat) NO teilweise zu NO₂ oxidiert. Dies dient dazu das NO zu NO₂-Verhältnis in einem Bereich von 1:1 einzustellen, so dass die nachfolgende reduktive Entfernung der Stickoxide nach dem wesentlich schnelleren "Fast-SCR"-Mechanismus erfolgen kann. Durch diesen Mechanismus werden NO und NO₂ mit NH₃ katalytisch zu N₂ und H₂O umgesetzt.

Die Umwandlung der eingespritzten Harnstofflösung unter vollständiger Verdampfung des Wassers zu gasförmigem Ammoniak erfolgt in zwei Schritten mit dem Harnstoffhydrolysekatalysator (H-Kat). Zuerst erfolgt die Thermolyse von Harnstoff, der sich thermisch in ein Äquivalent Ammoniak und ein Äquivalent Isocyansäure zersetzt. Aus der Isocyansäure wird dann durch eine Hydrolysereaktion ein weiteres Äquivalent Ammoniak und CO₂ gebildet. Die Hydrolyse findet am Harnstoff-Hydrolyse-Katalysator (H-Kat) statt, der im Abgassystem vor dem SCR-Katalysator positioniert wird. Die Aufgabe des H-Kats besteht in der möglichst quantitativen Umwandlung von Harnstoff in Ammoniak.
Thermolyse:

   CH₄N₂O -> NH₃ + HNCO
Hydrolyse:

   HNCO + H₂O -> NH₃ + CO₂

Anschließend erfolgt die Reduktion des Stickoxidgemisches mit dem entstandenen Ammoniak nach dem "Fast-SCR" Mechanismus und dem SCR-Kat.

2 NO + 2 NO₂ + 4 NH₃ -> 4 N₂ + 6 H₂O

"Fast-SCR"

Es kann vorkommen, dass zu viel Harnstoff zugeführt wird, so dass das daraus gebildete Ammoniak nicht mehr vollständig mit NOₓ reagieren kann. Bei dieser Fehldosierung kann Ammoniak, als sogenannter NH₃-Schlupf, in die Umgebung gelangen. Abhilfe schafft man, indem hinter dem SCR-Katalysator ein Oxidationskatalysator (Oxi-Kat) angeordnet wird. Dieser Sperrkatalysator wandelt im Falle einer unerwünschten Ammoniak-Emission das NH₃ wieder in N₂ und H₂O um.

Das Funktionieren des gesamten SCR Systems hängt also wesentlich von der Effizienz der Ammoniakbereitstellung durch den H-Kat ab. Typische aktive Beschichtungen für den Hydrolyse-Katalysator (H-Kat) sind Metalloxide, insbesondere das schwach saure Titandioxid in der Anatas-Modifikation als Aktivkomponente. Diese aktiven Massen werden mit Hilfe eines Beschichtungsverfahrens auf einen metallischen oder keramischen Trägerkörper mit Wabenstruktur aufgebracht.

Die Beschichtung der Trägerstrukturen des H-Kats erfolgt mit einem sogenannten "Washcoat", der üblicherweise Titandioxid und einen Binder enthält. Durch den Einsatz geeigneter Binder (häufig anorganische Sole) kann die mechanische Stabilität der Beschichtung auf der Oberfläche verbessert werden. Insbesondere bei der Verwendung von metallischen Substraten stellt aber die Aufbringung von gut haftenden und zugleich aktiven Beschichtungen eine große Herausforderung dar.

Weiterhin wird vorzugsweise die Harnstofflösung als feiner Nebel von sehr kleinen Teilchen (kleiner 10 µm) auf den Katalysator geführt. Im Idealfall würde also bei der am H-Kat erfolgenden NH₃-Freisetzung eine vollständige Verdampfung der Harnstofflösung stattfinden, bevor der Harnstoff auf den Hydrolyse-Katalysator trifft. In der Realität ist die Verdampfungsstrecke im Abgasstrang für eine vollständige Verdampfung zu kurz, so dass größere Tropfen auf die Eintrittsfläche des Katalysators treffen.

Da die auf den Katalysator auftreffende Harnstofflösung durch Tropfenschlagerosion eine extreme Belastung für die Beschichtung darstellt, ist die mechanische Stabilität der Beschichtung für den H-Kat von wesentlicher Bedeutung.

Weiterhin bestehen die derzeit üblicherweise verwendeten Harnstoff-Hydrolyse-Katalysatoren hautsächlich aus Titandioxid in der Anatas-Modifikation. Bei hohen Temperaturen kann es aber zu einer Phasenumwandlung von Anatas nach Rutil kommen. Die Rutil-Phase weist eine erheblich geringere Aktivität bezüglich der zu katalysierenden Hydrolysereaktion von Isocyansäure zu Ammoniak auf. Zudem sinkt die spezifische Oberfläche des Katalysators. Diese sogenannte Katalysatoralterung tritt insbesondere und beschleunigt ab einer Temperatur von 550 °C auf.

Um die Katalysatoralterung zu verringern oder zeitlich zu verzögern, werden verschiedene Zusatzstoffe dem Titandioxid zugesetzt. Dabei handelt es sich insbesondere um Siliziumoxid, Oxide der Lanthanoide oder Wolframoxid. Diese Zusatzstoffe verlangsamen zwar das Altern des Katalysators, wirken sich jedoch negativ auf dessen Leistungsfähigkeit aus und verringern den Umsatz von Isocyansäure zu Ammoniak. Die Hydrolyseaktivität von stärker sauren Mischoxiden, die WO₃ oder/und V₂O₅ enthalten, ist durch die starke Chemisorption des Thermohydrolyseprodukts Ammoniak generell geringer. Daher ist die Verwendung dieser Zusatzstoffe nachteilig.

Aus dem EP 0894523 B1 ist eine Verbrennungsanlage mit einem statischen Mischer zur Hydrolyse von Harnstoff für die selektive katalytische Reduktion von Stickoxiden bekannt. Die als H-Kat wirksame aktive Beschichtung des Mischers enthält Titandioxid mit Zusätzen wie Wolframtrioxid, Molybdäntrioxid und Vanadiumpentoxid. Durch den Zusatz von Sulfat und Phosphat wird eine höhere katalytische Aktivität erreicht. Es wird jedoch nicht das Problem der Temperaturstabilität und Haftfestigkeit der Beschichtung erkannt. Der Einsatz von Siliziumdioxid wird nicht erwähnt. Außerdem erfährt dieser H-Kat durch mischoxidische Zusätze die oben erwähnte Leistungsminderung.

Das DE 19734627 C1 offenbart in Tabelle 3 einen beschichteten Verdampfer, dessen katalytische Beschichtung aus TiO₂ und verschiedenen Mischoxiden besteht und eine erhöhte NOₓ Reduktionsaktivität aufweist. Allerdings wird hier nicht auf die Widerstandsfähigkeit gegen Tropfenschlagerosion oder die Haftfestigkeit der Beschichtung eingegangen.

Das EP 0487886 B1 offenbart einen Hydrolyse-Katalysator der aus einer Mischung aus TiO₂, Al₂O₃, SiO₂ oder ZrO₂ bestehen kann. Fünf- und sechswertige Elemente wie z.B. WO₃ können zur Änderung der Säureeigenschaften, als Stabilisatoren und als Promotoren zugesetzt werden.

Das EP 0555746 B1 offenbart einen Verdampfer, der als Strömungsmischer und Hydrolyse-Katalysator ausgebildet ist. Dabei wird durch den Einsatz nicht geradliniger Kanäle her ein höherer Wirkungsgrad der Harnstoffzersetzung erreicht. Die katalytische Beschichtung wird als H-Zeolith-haltige Abmischung von Al₂O₃ mit einem oder mehreren anderen Oxiden (TiO₂, SiO₂, ZrO₂) beschrieben.

Das EP 1153648 B1 offenbart einen Abgaskatalysator mit einer Vielzahl von Strömungspfaden, der sich durch eine zusätzliche Hydrolysebeschichtung auf einem SCR-Katalysator auszeichnet. Diese Hydrolysebeschichtung kann aus TiO₂, Al₂O₃, SiO₂ oder ZrO₂ bestehen.

Die WO2008/089956 A2 offenbart eine Vorrichtung zur selektiven katalytischen NOₓ-Reduktion in Abgasen unter Einsatz eines Harnstoff -Hydrolyse Katalysators der aus TiO₂ in der Anatasmodifikation besteht und der mit einem Washcoat hergestellt wird, dem eine ausreichend grosse Menge von 15-bis 30 Gew% an z.B SiO₂ Sol als Binder zur Erhoehung der Haftfestigkeit der Washcoat Suspension auf einem Traeger zugesetzt wurde.

Die EP 0615777 A1 offenbart eine Vorrichtung zur selektiven katalytischen Reduktion von NOₓ in sauerstoffhaltigen Abgasen enthaltend einen Harnstoff-Hydrolyse- und einen SCR-Katalysator. Der Harnstoff-Hydrolyse-Katalysator enthaelt TiO₂, Al₂O₃ und SiO₂. In einem Ausführungsbeispiel wird ein Material mit 73 Gew.-% TiO₂ und 6,7 Gew-% SiO₂ offenbart. Die US2003/0103889A1 offenbart ein Verfahren zur Herstellung von thermisch stabilen Silizium enthaltenden Titandioxid, bei dem Titanhydroxid or Titandioxid mit eine, Silica-Sol umgesetzt werden, wobei das entstehende TiO₂ in der Anatasform durch SiO₂ stabilisiert wird. In einem Ausführungsbeispiel wird ein Material mit 90 Gew.-% TiO₂, < 10 Gew-% SiO₂ und 0,24 Gew-% Schwefel offenbart. Die Katalysatoren des Standes der Technik weisen den Nachteil auf, dass sie gegen Tropfenschlagerosion unbeständig sind und auch eine ungenügende Haftfestigkeit der Beschichtung aufweisen, obwohl diese für die Leistungsfähigkeit eines Hydrogenkatalysators von Bedeutung sind. Weiterhin besteht die ungelöste Problematik der Temperaturstabilität der katalytisch aktiven Beschichtung.

Es bestand daher die Aufgabe, einen Harnstoff-Hydrolyse-Katalysator bereitzustellen, bei dem der Titandioxidanteil bei höheren Temperaturen keiner Phasenumwandlung von Anatas nach Rutil unterliegt und der eine gute Alterungsbeständigkeit aufweist und dadurch auch bei kurzfristig auftretenden erhöhten Temperaturspitzen nur wenig in seiner katalytischen Aktivität beeinflusst wird.

Zudem sollte der Harnstoff-Hydrolyse-Katalysator gegen die mechanischen Belastungen beim Tropfenschlag während der Harnstoffhydrolyse beständiger sein, ohne Einbußen bei der katalytischen Aktivität hinnehmen zu müssen.

Erfindungsgemäß wird die Aufgabe gelöst durch einen Harnstoff-Hydrolyse-Katalysator, umfassend eine auf einem Träger aufgebrachte katalytisch aktive Zusammensetzung enthaltend 92-96 Gew% Titandioxid in der Anatas-Modifikation, 3,0 -7,0 Gew.% Siliziumdioxid und eine Schwefelverbindung in einer Menge bezogen auf die gesamte katalytisch aktive Zusammensetzung von 0,3 bis 0,4 Gew% (berechnet als elementarer Schwefel), und hergestellt mit einer Washcoat-Suspension enthaltend ein Titandioxid in der Anatas-Modifikation, ein Polysiloxan und eine Schwefelverbindung.

Die katalytisch aktive Zusammensetzung des erfindungsgemäßen Harnstoff-Hydrolyse-Katalysators erweist sich auf dem Träger als besonders haftfest und ist besonders widerstandsfähig gegenüber Tropfenschlagerosion und ist dabei trotzdem außerordentlich aktiv bei der Harnstoff-Hydrolyse.

Der Anteil an SiO₂ in der katalytisch aktiven Zusammensetzung bzw. im fertigen Katalysator stammt bevorzugt aus organischen Siliziumverbindungen im weiter unten beschriebenen Washcoat (beispielsweise Siloxane oder Silane, z.B. aus der Silres-oder Geniosil-Reihe der Fa. Wacker) und nicht wie üblicherweise im Stand der Technik aus mit SiO₂ thermisch vorstabilisiertem TiO₂. Der organische Anteil der Siliziumverbindungen wird bei der Kalzinierung thermisch zersetzt und es verbleibt SiO₂ im Katalysator. Anatas wird dadurch vorteilhafterweise in-situ stabilisiert.

Es ist jedoch ebenso möglich beispielsweise ein SiO₂-Sol oder auch festes SiO₂ einzusetzen.

Weiter enthält die katalytisch aktive Zusammensetzung eine Schwefelverbindung. Bezogen auf die gesamte katalytisch aktive Zusammensetzung (und berechnet als elementarer Schwefel) ist Schwefel in einem Anteil von 0,3 bis 0,4 Gew.-% enthalten. Der Schwefel liegt dabei typischerweise als Sulfat vor. Das Sulfat kann dabei auch erst während der Herstellung des Katalysators bzw. der katalytisch aktiven Zusammensetzung aus entsprechenden Ausgangsverbindungen entstehen oder schon in der weiter unter beschriebenen Washcoat-Suspension als Sulfat vorliegen.

Als überaus geeignet hat sich eine katalytisch aktive Zusammensetzung aus 94,4 Gew.-% TiO₂, 5,3 Gew.-% SiO₂ und 0,3 Gew.-% Schwefel erwiesen.

Für spezielle Anwendungen kann die Haftung der erfindungsgemäßen Zusammensetzung am Träger durch eine zusätzliche sogenannte "Primerschicht" verbessert werden. Die erfindungsgemäße "Primerschicht" weist verglichen mit der eigentlichen katalytischen Zusammensetzung einen höheren Binderanteil bezogen auf den Anteil an TiO₂ auf. D.h. die Mengen an TiO₂ und/oder TiO₂-Sol im Washcoat werden verringert und die Menge an Siliziumverbindungen im Washcoat erhöht. Je weniger TiO₂ in der "Primerschicht" vorhanden war, desto besser erwies sich die Haftung der Primerschicht am Träger. Die Primerschicht ist dabei bevorzugt frei von schwefelhaltigen Verbindungen jedoch kann sie in bestimmten Weiterbildungen der vorliegenden Erfindung auch eine Schwefelverbindung umfassen. Eine ganz besonders bevorzugte Zusammensetzung einer Primer-Washcoat-Suspension besteht aus 10 kg TiO₂ in Mischung mit 40 kg Silres MP 42 E.

Erfindungsgemäß wird die katalytisch aktive Zusammensetzung bzw. deren Vorläufer auf einen Träger aufgebracht, wobei der Träger aus einer Keramik, einem Metall oder einer Metalllegierung besteht.

Vorzugsweise liegt der Träger in Form eines Wabenkörpers, eines Monolithen, eines Rohrs oder eines Schaums vor.

Mit metallischen Substraten lassen sich dabei Beladungen mit der erfindungsgemäßen katalytisch aktiven Zusammensetzung von bis zu 200 g/l darstellen, die trotz der hohen Beladung eine extrem gute Haftung aufweisen. Die optimale Beladung für den erfindungsgemäßen Zweck liegt bei 80 g/l ± 10 %.

Besonders bevorzugt ist die erfindungsgemäße katalytisch aktive Zusammensetzung auf typischen Trägern für Ausgangskatalysatoren aus FeCrAl-Legierungen, die hitze- und korrosionsbeständig aufgebracht. Derartige Träger sind z.B. in der EP 0 487 886 B1 offenbart.

In gleicher Weise können Katalysatorträger aus keramischem Material Verwendung finden. Häufig wird es sich bei dem keramischen Material um ein inertes niedrigoberflächiges Material wie Cordierit, Mullit, alpha-Aluminiumoxid oder Siliziumcarbid handeln. Jedoch kann der verwendete Katalysatorträger auch aus hochoberflächigem Trägermaterial wie gamma-Aluminiumoxid bestehen.

Anstelle auf die vorstehend genannten Träger kann der Hydrolyse-Katalysator bzw. die katalytisch aktive Zusammensetzung in bzw. auf einem der üblichen Bauteile eines Abgasreinigungssystems aufgebracht werden, beispielsweise auf eine Verdampfereinheit, auf bzw. in einer Dosierleitung, auf bzw. in einer Zufuhrleitung mit der der Harnstoff-Hydrolyse-Katalysator mit der Abgasleitung verbindbar ist oder zumindest auf Teilen einer Zufuhrleitung zur Zufuhr des gasförmigen Stoffgemisches zum eigentlichen Harnstoff-Hydrolyse-Katalysator oder auf Teilen der Verbindungseinheit.

Dies erhöht die Umsetzungseffektivität und erlaubt es, den Harnstoff-Hydrolyse-Katalysator entsprechend kleinvolumiger mit einer kleineren katalytisch aktiven Oberfläche auszubilden.

Weiter wird vorliegend die Verwendung einer geträgerten katalytisch aktiven Zusammensetzung, wie oben definiert, enthaltend Titandioxid, Siliziumoxid und eine Schwefelverbindung als Harnstoff-Hydrolyse-Katalysator beschrieben. Insbesondere liegt die geträgerte katalytisch aktive Zusammensetzung als Beschichtung auf einem Katalysatorträgerkörper vor und zeigt verbesserte Haftungseigenschaften auf dem Katalysatorträgerkörper. Hinsichtlich der weiteren bevorzugten Ausgestaltungen der katalytisch aktiven Zusammensetzung gelten die oben beim Harnstoff-Hydrolyse-Katalysator genannten Bevorzugungen.

Ausserdem wird eine Washcoat-Suspension zur Herstellung der katalytisch aktiven Zusammensetzung des erfindungsgemäßen Hydrolysekatalysators beschrieben.

Die Washcoat-Suspension enthaelt Titandioxid, ein Polysiloxan als Bindemittel, und eine Schwefelverbindung. Dabei liegt das Titandioxid bevorzugt in der Anatas-Modifikation vor.

Unter dem Begriff "siliziumorganische Verbindung" werden Verbindungen verstanden, die sich von Silan (SiH₄) durch Austausch eines oder mehrerer H-Atome durch organische Reste R ableiten, wobei die Reste R mit den Siliziumatomen über Einfach- oder Mehrfachbindungen mit den ein- bis sechszähligen ungeladenen oder geladenen Si-Atomen verknüpft sein können. Weiter fallen unter diesen Begriff sogenannte Silikonkautschuke, Organyloligo- und -polysilane, Organylsilylene, Silene und Siline, Siloxane bzw. Polysiloxane.

Washcoat-Suspensionen enthalten in der Regel eine Dispersion aus Wasser als Lösungsmittel und äußerst feinkörnige Metalloxide, z.B. Titandioxid oder Aluminiumoxide, mit denen der Katalysatorträger beschichtet wird. Hierbei kann es sich insbesondere um Sol-Gel Systeme handeln.

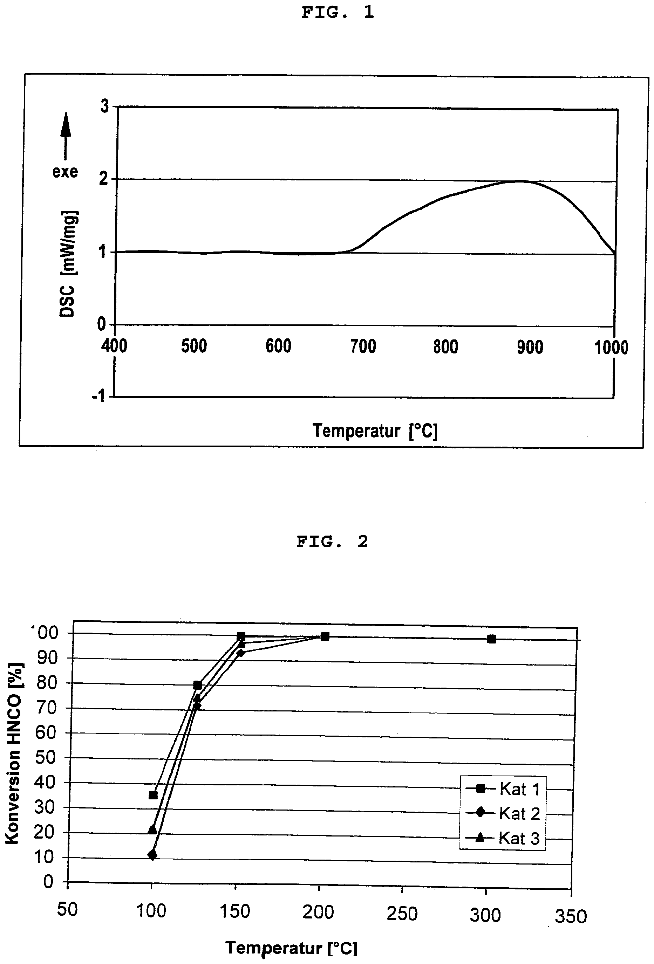

Überraschenderweise hat sich gezeigt, dass die Verwendung der Polysiloxanverbindung in Kombination mit der Schwefelverbindung zu einer Stabilisierung der Anatas-Modifikation des TiO₂ führt, ohne dass sich dies negativ auf die Aktivität des späteren Katalysators auswirkt. Die Phasenumwandlung in das weniger aktive Rutil tritt erst ab einer Temperatur von 690 °C auf und ist damit um ca. 100 °C zu höheren Temperaturen verschoben als bei nicht stabilisiertem Anatas zu erwarten wäre. Die verschobene Phasenumwandlung von Anatas zu Rutil lässt sich gut in der entsprechenden DSC-Kurve erkennen (vgl. Figur 1). Damit wird einem Leistungsabfall des Katalysators bei eintretenden Temperaturspitzen entgegengewirkt.

Ein weiterer Vorteil bei der Verwendung der Washcoat-Zusammensetzung liegt darin, dass sich wie vorstehend schon erwähnt damit auf metallischen Substraten Beladungen von bis zu 200 g/l darstellen lassen. Die nach der Kalzinierung des Washcoats resultierenden Beschichtungen aus den erfindungsgemäßen katalytisch aktiven Zusammensestzungen weisen trotz der hohen Beladung eine extrem gute Haftung auf.

In einer bevorzugten Ausgestaltung umfasst die Washcoat-Suspension ferner ein Titandioxid-Sol. Insbesondere die Kombination der beiden Binderkomponenten Titandioxid-Sol und siliziumorganische Verbindung führt zu einer guten Vernetzung.

In einer besonders bevorzugten Ausführungsform umfasst die Washcoat-Suspension als Polysiloxaneines in Form einer Silikonharzemulsion, bevorzugt Silres MP42 E®, als Bindemittel.

Die Washcoat-Suspension weist einen Schwefelanteil von 0,01 bis 10 Gew.-% auf. Besonders bevorzugt ist ein Anteil von 0,01 bis 1,0 Gew.-%, mehr bevorzugt ein Anteil von 0,1 bis 0,6 Gew. %, insbesondere bevorzugt 0,3 bis 0,4 Gew.-% Schwefel. Die Angaben beziehen sich auf den Gesamtschwefelgehalt der in der Washcoat Suspension vorliegenden Schwefelverbindung. Geeignete Schwefelverbindungen sind z.B. Sulfate, Sulfite, Thiosulfate, Peroxodisulfate, Schwefelsäure usw. insbesondere deren Titansalze. Ganz besonders bevorzugt ist Titandisulfat und Titanylsulfat.

Überraschenderweise wirkt sich der Schwefelgehalt auf die Eigenschaften der erfinderischen Washcoat-Suspension aus. Mit höherem oder auch niedrigerem Gehalt an Schwefel bzw. Schwefelverbindung steigt auch die Viskosität des Washcoats.

Die erhöhte Viskosität bewirkt eine wesentlich schlechtere Verarbeitbarkeit bei der Trägerbeschichtung (Befüllung und Entleerung) und schlechtere Haftungseigenschaften der Beschichtung auf der Substratoberfläche.

Die Washcoat-Suspension weist vorzugsweise einen Feststoffgehalt von 40,0 bis 60,0 Gew.-%, bevorzugt von 46,0 bis 52,0 Gew.-% auf.

Es wurde festgestellt, dass sich die Washcoat-Suspensionen trotz ihres verhältnismäßig hohen Feststoffanteils mittels des erfindungsgemäßen Verfahrens besonders einfach und gleichmäßig auf einen Katalysatorträger aufbringen lassen.

Weitere anorganische Komponenten der Washcoatdispersion stellen beispielsweise feinteilige und hochoberflächiqe Oxide wie Aluminiumoxid, Siliziumdioxid, Seltenerdoxide, Nickeloxid, Eisenoxid, Erdalkalimetalloxid, Silizide wie Molybdansilizid, und/oder Zeolithe. Diese Stoffe können ganz oder teilweise als Oxide und/oder als beliebige lösliche und/oder unlösliche Verbindungen, zum Beispiel als Nitrate, Acetate, Oxalate, Tartrate, Formiate, Carbonate oder Hydroxide in der Suspension vorliegen. In letzterem Fall erfolgt dann üblicherweise die Überführung in die katalytisch aktive Spezies, bzw. in das feinteilige Beschichtungsmaterial meist durch thermische Zersetzung. Bevorzugt finden Katalysatorformulierungen Verwendung mit gegebenenfalls stabilisiertem Aluminiumoxid und Ceroxid, Zirkonoxid, Seltenerdoxiden, Erdalkalimetalloxiden, Platinmetallen und/oder deren Vorläufer bzw. deren Mischungen. Vorzugsweise enthält die Washcoat-Suspension auch übliche Dispergiermittel, um die Washcoat-Suspension zu stabilisieren.

Bei der Herstellung der Washcoat-Suspension ist es wichtig, die Mischungsreihenfolge zu beachten. Wird ein TiO₂-Sol verwendet, so muss dieses zuerst vorgelegt werden. Dann kann ggf. zusätzliches TiO₂ sowie die Schwefelverbindung portionsweise zugegeben und eingerührt werden. Erst zum Schluss wird die siliziumorganische Verbindung beigemischt und eingerührt. Damit wird eine optimale Vernetzung der Binderkomponenten TiO₂-Sol und siliziumorganische Verbindung gewährleistet und eine entsprechend gute Haftfestigkeit der Beschichtung auf einem Substrat bzw. Träger erzielt.

Bevor der Washcoat zum Beschichten verwendet werden kann, wird er bevorzugt mindestens 2 Tage bei Raumtemperatur belassen und so gealtert.

Die Washcoat-Suspension wird für die Herstellung des Harnstoff-Hydrolyse-Katalysators verwendet und ergibt nach Kalzinieren die katalytisch aktive Zusammensetzung.

Die Aufbringung der katalytisch aktiven Zusammensetzung des Harnstoff-Hydrolyse-Katalysators bzw. der Washcoat-Suspension erfolgt dabei üblicherweise nach im Stand der Technik bekannten Methoden, wie z.B. durch Beschichtung im Tauchbad oder durch Sprühbeschichtung. Geeignete Verfahren sind beispielhaft in der WO 2008/019857 A1, der EP 1885495 A2, der WO 2006/125648 A2, der WO 2007/057209 A1 oder der WO 2007/057210 A1 beschrieben worden.

Bevorzugt wird der Washcoat durch Tauchen in eine Washcoat-Suspension in die Kanäle der Substrate gebracht. Es ist aber auch möglich die Washcoatbeschichtung durch mehrfaches Aufsprühen, insbesondere der Eintrittsstirnfläche des Trägerkörpers aufzubringen. Hiernach werden die Kanäle bevorzugt durch Ausblasen wieder durchlässig gemacht. Der Träger kann bevorzugt in einem Luftstrom bei 120 °C getrocknet werden.

Das erfindungsgemäße Verfahren zur Herstellung eines Harnstoff-Hydrolyse-Katalysators umfasst daher bevorzugt die folgenden Schritte des:
a)Aufbringens der Washcoat-Suspension enthaltend ein Titandioxid in der Anatas-Modifikation, ein Polysiloxan und eine Schwefelverbindung auf einen Träger,
b)Entfernens der überschüssigen Washcoat-Suspension vom Träger
c)Trocknens des feuchten Trägers
d)Kalzinierens des beschichteten Trägers
e)Abkühlen des beschichteten Trägers

Vorzugsweise erfolgt Schritt a) durch Tauchen des Trägers in die Washcoat-Suspension.

Besonders bevorzugt ist weiter das Einbringen des Washcoats durch Aussetzen des Tauchbades einer Vibration.

Im Schritt b) werden die Kanäle des Trägers bevorzugt mit Druckluft ausgeblasen oder überschüssiges Beschichtungsmaterial abgesaugt.

Noch bevorzugter ist im Schritt b) die anschließende Entleerung des überschüssigen Washcoats durch eine Zentrifuge. Diese Methode hat sich insbesondere bei strukturierten Substraten mit Schaufeln und Perforationen bewährt.

Als sehr wichtig für die Leistungsfähigkeit des erfindungsgemäßen Katalysators bzw. der katalytisch aktiven Zusammensetzungen hat sich die thermische Behandlung des mit dem Washcoat beschichteten Trägers herausgestellt. Es hat sich gezeigt, dass der Trocknungsschritt nicht zu kurz sein darf.

Bei einer sofortigen Kalzinierung bei hohen Temperaturen kann es zu einer Art "Verglasung" auf der Oberfläche kommen, die die Poren dicht macht und damit keine ausreichend hohe Oberfläche für die Reaktion mehr vorhanden ist. Bevorzugt ist, wenn die enthaltene Feuchtigkeit langsam bei 80 °C entfernt wird.

Vorzugsweise wird daher der noch feuchte mit Washcoat Suspension beschichtete Träger in Schritt c) für mindestens zwei Stunden, bevorzugt 3 bis 10 Stunden, bei vorzugsweise 50 bis 150 °C, besonders bevorzugt 80 °C, bis zur Massenkonstanz getrocknet. Bei sehr großen Substraten muss die Trockenzeit entsprechend angepasst werden. Vorzugsweise wird im Umlufttrockenschrank gearbeitet.

Anschließend wird der beschichtete Träger in Schritt d) für 1 bis 20 Stunden, bevorzugt 8 bis 12, besonders bevorzugt 9 bis 11 Stunden, bei 100 bis 1000 °C, bevorzugt 300 bis 600 °C, besonders bevorzugt 400 bis 500 °C kalziniert. Hierbei wird typischerweise ein Umluftofen verwendet.

Die Abkühlung in Schritt e) nach der Kalzinierung sollte möglichst kleiner 20 K/min, bevorzugt 10 K/min, besonders bevorzugt kleiner 5 K/min, insbesondere 1 bis 4 K/min betragen.

Die Beschichtung des Trägers erfolgt mit einer Konzentration von 40 bis 200 g/l, bevorzugt von 60 bis 160 g/l pro Volumen des Trägers.

In einer besonderen Ausgestaltung des erfindungsgemäßen Verfahrens kann wie schon vorstehend kurz erläutert auf den Träger zunächst eine als Haftvermittler (Primerschicht) für die erfindungsgemäße Zusammensetzung dienende Precoatlösung oder -dispersion aufgebracht werden. Wie vorstehend schon gesagt, verbessert ein hoher Gehalt an Polysiloxan die Haftung. Ein typischer Ansatz ist beispielsweise: 10 kg TiO₂ vermischt mit 40 kg Silres MP 42 E. Die Suspension wird äußerst dünn aufgetragen, da die Aktivität bzgl. Hydrolyse relativ gering ist. Typische Beladungen auf Substraten liegen hier zwischen 2 und 15 g/l, bevorzugt bei ca. 8 - 10 g/l.

Nachdem das Lösungsmittel entfernt wurde, beispielsweise durch Abdampfen, kann mittels des erfindungsgemäßen Verfahrens eine Washcoat-Suspension auf den Katalysatorträger aufgebracht werden.

Gegenstand der Erfindung ist auch ein Harnstoff-Hydrolyse-Katalysator, welcher nach dem erfindungsgemäßen Verfahren hergestellt wurde.

Verwendung findet der erfindungsgemäße Harnstoff-Hydrolyse-Katalysator in Systemen zur Bereitstellung von Ammoniak aus einer Harnstoff-Wasser Lösung.

Der erfindungsgemäße Harnstoff-Hydrolyse-Katalysator eignet sich demgemäß hervorragend zum Einsatz in Abgasreinigungssystemen oder zur Verringerung von Stickoxidemissionen von mobilen und stationären Verbrennungseinrichtungen.

Mobile Verbrennungseinrichtungen im Sinne der vorliegenden Erfindung sind beispielsweise Verbrennungsmotoren von Kraftfahrzeugen, insbesondere Dieselmotoren, Stromerzeugungsaggregate auf Basis von Verbrennungsmotoren oder sonstige Aggregate auf Basis von Verbrennungsmotoren.

Bei den stationären Verbrennungseinrichtungen handelt es sich für gewöhnlich um Kraftwerksanlagen, Feuerungsanlagen, Müllverbrennungsanlagen und auch um Heizungssysteme von Privathaushalten.

Die Erfindung ist anhand von Ausführungbeispielen sowie der Figuren näher erläutert, ohne dass diese als einschränkend verstanden werden sollen.
- Figur 1: zeigt einen Ausschnitt aus einer DSC Kurve einer Washcoat-Suspension.
- Figur 2: zeigt den Isocyansäureumsatz verschiedener Katalysatoren.
- Figur 3: zeigt eine Testapparatur zur Haftfähigkeitsbestimmung mittels Pressluft.
- Figur 4: zeigt eine vergrößerte Ansicht der Testapparatur zur Haftfähigkeitsbestimmung mittels Pressluft.
- Figur 5: zeigt eine Testapparatur zur Haftfähigkeitsbestimmung mittels Ultraschall.

### Ausführungsbeispiel 1:

Zur Herstellung eines erfindungsgemäßen Harnstoff-Hydrolyse-Katalysators wurde zuerst die Washcoat-Suspension bereitgestellt. Hierbei wurden die Ausgangsverbindungen in den folgenden Mengen eingesetzt:
- 20,0 kg TiO₂ (in der Anatas-Modifikation mit einer Ti(O)SO₄ Beimischung) Ti(O)SO₄ ist dabei in dieser Mischung in einer Menge enthalten, die einem Gesamt-Schwefel-Gehalt von 0,35 Gew.-% bezogen auf die Gesamtmenge TiO₂ entspricht
- 26,0 kg TiO₂-Sol (Feststoffgehalt 12 %, pH = 1,1)
- 6,0 kg Silres MP 42 E® von Wacker (Polysiloxan + Wasser + Xylol)

Zunächst wurde das TiO₂-Sol in einem geeignetem Behälter (meist ein 50 bis 100 L Kunststofffass) eingewogen und bei niedriger Umdrehungszahl mit einem drei-blättrigen Propellerrührer gerührt.

Danach wurde das TiO₂-Pulver abgewogen und portionsweise dem TiO₂-Sol zugegeben und eingerührt.

Sobald das TiO₂-Pulver homogen in der Flüssigkeit eingerührt war, wurde das Silres MP 42 E® abgewogen, der gerührten Suspension zugegeben und die Suspension weitere 15 Minuten gerührt. Anschließend wurde die so erhaltene Washcoatsuspension zweimal mit einer Zahnkolloidmühle MZ80® (Firma FrymaKoruma) vermahlen, bzw. dispergiert.

Der Washcoat wies einen Feststoffgehalt von 49,0 Gew.-% ± 3,0 Gew.-% auf.

Der Washcoat wurde vor dem Aufbringen auf einem Träger 5 Tage bei Raumtemperatur gealtert.

Für die Beschichtung wurde ein Trägersubstrat (Wabenkörper (Monolith) erhältlich von der Firma EMITEC mit einer Zelligkeit von 400 cpsi) aus FeCrAl-Legierung durch vollständiges Eintauchen in die Washcoat-Suspension benetzt. Anschließend wurden die Kanäle des Trägers frei geblasen. Danach wurde der feuchte Monolith für mindestens 2 Stunden im Umlufttrockenschrank bei 80 °C bis zur Massenkonstanz getrocknet. Anschliessend wurde der Katalysator für 10 Stunden bei 450 °C im Umluftofen kalziniert. Die Aufheizrate betrug hierbei 10 K/min. Die darauf folgende Abkühlung erfolgte bei 2 K/min. Der so erhaltene Harnstoff-Hydrolyse-Katalysator kann z.B. in Abgasnutzungssystemen von Kraftfahrzeugen eingesetzt werden. Die katalytisch aktive Zusammensetzung wies folgende Anteile der Bestandteile (in Gew.-%) auf:
94,4 % TiO₂, 5,3 % SiO₂, 0,3% Schwefel (berechnet als elementarer Schwefel).

Die Beladung betrug 100 g/L aktive Masse
Diese Zusammensetzung erwies sich als besonders haftfest und widerstandsfähig gegenüber Tropfenschlagerosion.

### Vergleichsbeispiel 2:

Gemäß Ausführungsbeispiel 1, wurden 3 weitere Trägersubstrate der Firma EMITEC aus FeCrAl-Legierung mit Washcoatsuspensionen beschichtet, um den Einfluss der Menge an SiO₂ in der katalytisch aktiven Zusammensetzung in den Katalysatoren Kat 1 (erfindungsgemaess), Kat 2 und Kat 3 (Vergleich) zu bestimmen.

Dabei wurde die Menge an Silres MP 42 E entsprechend erhöht bzw. erniedrigt um auf die entsprechenden SiO₂-Gehalte im kalzinierten Katalysator zu kommen. Bei Katalysator 4 wurde auf die Zugabe von Silres MP 42 E verzichtet.

Es wurden an den Katalysatoren Kat 1 bis Kat3

Laborprüfstandsmessungen bei einer Raumgeschwindigkeit (GHSV) von 53.000 h⁻¹ und einer Isocyansäuredosierung von 1000 ppm im N₂-Strom (5 % H₂O) durchgeführt, um den Umsatz an Isocyansäure zu verfolgen.

Insbesondere wurde der Isocyansäureumsatz ab 100 °C bestimmt.

Aus Figur 2 ist ersichtlich, dass der erfindungsgemaesse Katalysator Kat 1 schon bei 150 °C einen vollständigen Umsatz von Isocyansäure zu Ammoniak und Kohlendioxid ermöglicht und bei Temperaturen von 100 °C einen besseren Umsatz als die Vergleichskatalysatoren Kat 2 und Kat 3 erreicht.

Kat 2 (SiO₂-Gehalt von 15 Gew.-%) und Kat 3 (SiO₂-Gehalt von 1,5 Gew.-%) weisen dem gegenüber schlechtere Werte auf.

Tabelle 1 zeigt die Zusammensetzungen der so erhaltenen Katalysatoren Kat 1 bis Kat 4 (Angaben jeweils in Gew.-%, Kat 4 ohne SiO₂).

**TABELLE 1: Katalytisch aktive Zusammensetzungen der Katalysatoren Kat 1 bis Kat 4**

| | **TiO₂** | **SiO₂** | **S** |
|---|---|---|---|
| **Kat 1 (erfindungsgemaess)** | 94,4 % | 5,3 % | 0,3 % |
| **Kat 2** | 84,7 % | 15 % | 0,3 % |
| **Kat 3** | 98,2 % | 1,5 % | 0,3 % |
| **Kat 4** | 99,7 % | --- | 0,3 % |

### Ausführungsbeispiel 3:

Die Katalysatoren Kat 1 bis Kat 4 wurden zudem auf planare Testbleche aufgetragen um Haftungstests durchzuführen. Dabei wurden zwei unterschiedliche Testverfahren angewendet, die im Folgenden erläutert werden:

### Presslufttest:

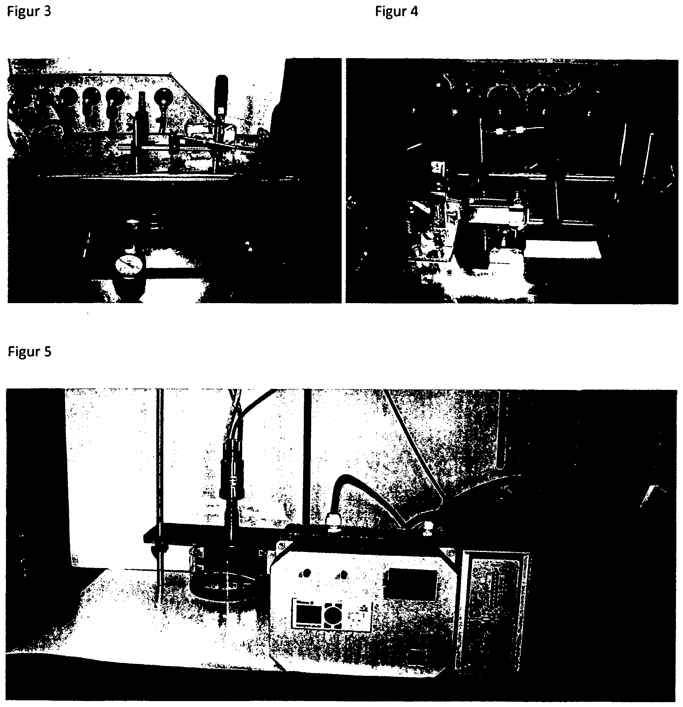

Die verwendete Testapparatur ist in den Figuren 3 und 4 zu sehen und besteht aus einer Fixiereinheit für das Testblech, einer Druckregulierung und einer Düse, welche seitlich auf die Mitte des Testblechs gerichtet ist. Für den Test wird das entsprechende beschichtete Blech (Breite 2,5 cm) in die Halterung eingespannt. Der Vordruck am Manometer wird auf 6 bar eingestellt. Die Testzeit beträgt 15 sec. Das Blech wird durch die strömende Druckluft in Schwingung versetzt und simuliert die Bedingungen im Abgasstrom eines Fahrzeugs.

### Auswertung:

Die Auswertung erfolgt über Auswiegen.

Bei der Haftungsbeurteilung mittels Auswiegen wird der prozentuale Abtrag an Beschichtungsmasse durch die Gewichtsbestimmung vor und nach dem Test ermittelt.

### Ultraschalltest:

Die verwendete Testapparatur ist in Figur 5 zu sehen und besteht aus einer Fixiereinheit für das Testblech in einem Testgefäß und einem Ultraschallerzeuger. In dem Testgefäß werden 200 g dest. H₂O eingewogen. Am Modulgenerator werden 54 % der maximalen Amplitude eingestellt. Die Impulszahl wurde auf 4 festgelegt. Die Dauer eines Impulses beträgt 1,5 sec. Das entsprechende beschichtete Testblech wird mit dest. H₂O abgewaschen und dann in die Halterung am Boden des Testgefäßes eingebracht.

Das Blech wird durch den Ultraschall in Schwingung versetzt und es kommt zu einem entsprechenden Abtrag der Beschichtung.

### Auswertung:

Die Auswertung erfolgt über Auswiegen.

Bei der Haftungsbeurteilung mittels Auswiegen wird der prozentuale Abtrag an Beschichtungsmasse durch die Gewichtsbestimmung vor und nach dem Test in trockenem Zustand ermittelt.

Die Haftungsuntersuchungen ergaben folgende Ergebnisse:

**Tabelle 2: Beschichtungsabtrag mittels Pressluft- und Ultraschalltest der Katalysatoren 1 bis 4.**

| | Beschichtungsabtrag in % | |
|---|---|---|
| | Presslufttest | Ultraschalltest |
| Kat 1 (erfindungsgemaess) | 3,0 | 4,3 |
| Kat 2 | 1,5 | 2,1 |
| Kat 3 | 12,2 | 17,4 |
| Kat 4 | 32,1 | 48,7 |

Die Ergebnisse zeigen deutlich die Abhängigkeit der Haftung vom Si-organischen Anteil im Washcoat. Eine Erhöhung des Anteils an Silres MP 42 E führt zu einer erheblichen Steigerung der Haftfestigkeit der Washcoatbeschichtung.

## Patentansprüche

1. Harnstoff-Hydrolyse-Katalysator umfassend eine auf einem Träger aufgebrachte katalytisch aktive Zusammensetzung enthaltend 92-96 Gew% Titandioxid in der Anatas-Modifikation, 3,0 -7,0 Gew.% Siliziumdioxid und eine Schwefelverbindung in einer Menge bezogen auf die gesamte katalytisch aktive Zusammensetzung von 0,3 bis 0,4 Gew% (berechnet als elementarer Schwefel), und hergestellt mit einer Washcoat-Suspension enthaltend ein Titandioxid in der Anatas-Modifikation, ein Polysiloxan und eine Schwefelverbindung.

2. Harnstoff-Hydrolyse-Katalysator nach Anspruch 1, wobei der Träger für die katalytisch aktive Zusammensetzung aus einer Keramik, einem Metall oder einer Metalllegierung besteht.

3. Harnstoff-Hydrolyse-Katalysator nach Anspruch 2, wobei der Träger in Form eines Wabenkörpers, eines Monolithen, eines Rohrs oder eines Schaums vorliegt.

4. Verfahren zur Herstellung eines Harnstoff-Hydrolyse-Katalysators gemäß einem der Ansprüche 1 bis 3, umfassend die Schritte des:
a) Aufbringens einer Washcoat-Suspension enthaltend ein Titandioxid in der Anatas-Modifikation, ein Polysiloxan und eine Schwefelverbindung auf einen Träger,
b) Entfernens der überschüssigen Washcoat-Suspension vom oder aus dessen Träger,
c) Trocknens des feuchten Trägers,
d) Kalzinierens des beschichteten Trägers,
e) Abkühlens des beschichteten Trägers.

5. Verfahren nach Anspruch 4, wobei Schritt c) für mindestens 2 Stunden bei 50 bis 150°C bis zur Massenkonstanz durchgeführt wird.

6. Verfahren nach Anspruch 5, wobei die Abkühlung im Schritt e) bei kleiner 20 K/min erfolgt.

## Claims

1. Urea hydrolysis catalyst comprising a catalytically active composition applied to a support, comprising 92-96% by weight titanium dioxide in the anatase modification, 3.0 to 7.0% by weight silicon dioxide and a sulphur compound in an amount based on the total catalytically active composition of 0.3 to 0.4% by weight (calculated as elemental sulphur), and prepared with a washcoat suspension comprising a titanium dioxide in the anatase modification, a polysiloxane and a sulphur compound.

2. Urea hydrolysis catalyst according to Claim 1, wherein the support for the catalytically active composition consists of a ceramic, a metal or a metal alloy.

3. Urea hydrolysis catalyst according to Claim 2, wherein the support is in the form of a honeycomb, a monolith, a tube or a foam.

4. Process for producing a urea hydrolysis catalyst according to any of Claims 1 to 3, comprising the steps of:
a) applying a washcoat suspension comprising a titanium dioxide in the anatase modification, a polysiloxane and a sulphur compound to a support,
b) removing the excess washcoat suspension from or out of the support thereof,
c) drying the moist support,
d) calcining the coated support,
e) cooling the coated support.

5. Process according to Claim 4, wherein step c) is conducted for at least 2 hours at 50 to 150°C up to constant mass.

6. Process according to Claim 5, wherein the cooling in step e) is effected at less than 20 K/min.

## Revendications

1. Catalyseur d'hydrolyse d'urée comprenant une composition catalytiquement active appliquée sur un support, contenant 92-96% en poids de dioxyde de titane dans la modification anatase, 3,0-7,0% en poids de dioxyde de silicium et un composé soufré en une quantité, par rapport à la composition catalytiquement active totale, de 0,3 à 0,4% en poids (calculé sous forme de soufre élémentaire), et préparé à l'aide d'une suspension d'imprégnation (washcoat) contenant un dioxyde de titane dans la modification anatase, un polysiloxane et un composé soufré.

2. Catalyseur d'hydrolyse d'urée selon la revendication 1, le support pour la composition catalytiquement active étant constitué par une céramique, un métal ou un alliage métallique.

3. Catalyseur d'hydrolyse d'urée selon la revendication 2, le support se trouvant sous forme d'un corps en nid d'abeille, d'un monolithe, d'un tube ou d'une mousse.

4. Procédé pour la préparation d'un catalyseur d'hydrolyse d'urée selon l'une quelconque des revendications 1 à 3, comprenant les étapes de :
a) application d'une suspension d'imprégnation (washcoat) contenant un dioxyde de titane dans la modification anatase, un polysiloxane et un composé soufré sur un support,
b) élimination de la suspension d'imprégnation (washcoat) en excès du support ou de son support,
c) séchage du support humide,
d) calcination du support revêtu,
e) refroidissement du support revêtu.

5. Procédé selon la revendication 4, l'étape c) étant réalisée pendant au moins 2 heures à 50 jusqu'à 150°C jusqu'à masse constante.

6. Procédé selon la revendication 5, le refroidissement dans l'étape e) ayant lieu à moins de 20 K/min.
